# EUROPEAN PATENT SPECIFICATION

(11) **EP 0 578 453 B1**
(45) Date of publication and mention of the grant of the patent: **22.10.1997**
(21) Application number: 93305219.3
(22) Date of filing: 02.07.1993
(51) Int. Cl.: B24C 11/00, C09K 3/14

(54) **Zirconia based shot media**
Strahlmedium auf der Basis von Zirkonium(di)oxid
Produit de grenaillage à base de zircon

(30) Priority: 02.07.1992 JP 197408/92; 01.04.1993 JP 75639/93
(43) Date of publication of application: 12.01.1994
(73) Proprietor: TOSOH CORPORATION, Yamaguchi-ken 746 (JP); NIKKATO CORP., Sakai-shi, Osaka-fu 590 (JP)
(72) Inventor: Kawanami, Toshio, Sakai-shi, Osaka-fu 588 (JP); Ohnishi, Hiroshi, Sakai-shi, Osaka-fu 593 (JP); Matsumura, Hiroyuki, Shinnanyo-shi, Yamaguchi-ken 746 (JP); Aimoto, Michiyuki, Kudamatsu-shi, Yamaguchi-ken 744 (JP); Arakawa, Toshihiko, Shinannyo-shi, Yamaguchi-ken 746 (JP); Ogai, Michiharu, Hikari-shi, Yamaguchi-ken 743 (JP)
(74) Representative: Kearney, Kevin David Nicholas

(56) References cited:
- EP-A- 0 129 188
- EP-A- 0 314 939
- EP-A- 0 351 827
- US-A- 3 929 498
- US-A- 4 035 962
- DATABASE WPIL Week 9143, Derwent Publications Ltd., London, GB; AN 91-313933

## Description

This invention relates to an artificial shot media that can be employed in shot peening, shot blasting and the like and to a process for the preparation of a shot media.

Artificial shot media is employed in shot peening for preventing stress corrosion cracking of steel, for providing wear resistance of mirror finished surfaces of various metals or alloys, for providing an ornamental effect to a surface of a work (as a substitute of buffing and the like), and in shot blasting for removing rust formed on a surface of a work, seasoned painted films, lining coats, sprayed coatings, plated coats and the like, for finishing such as removing slag after welding, deburring a resin product after forming and for providing random asperity to a surface of a metal based material before various coatings and the like. For such purposes, random edged particles of fused alumina, silicon oxide, steel grit, cast iron grit and the like or spherical particles of steel shot, glass beads, alumina-ball and the like, are known.

In recent years, shot peening and the like has employed a shot media having a small diameter particles of material other than metals such as glass, zircon and alumina. It is performed for providing wear resistance of a mirror finished surface of various alloys or for providing ornamental effects of a mirror finished surface as a substitute to buffing.

As characteristics of a shot media having a small diameter particles employed in shot peening or shot blasting, it is preferred that the media has a large specific gravity (or density), such as in a shot media having a large particle diameter, high mechanical strength, and is difficult to be shattered by the impact of shot.

In recent times shot media having particle sizes of no more than 3 mm, or no more than 0.3 mm for especially high accuracy, has been required to meet demands for higher performance with respect to complexity of the shape of the work or surface properties such as smoothness, dimension accuracy, reflectivity and gloss of the surface.

Fused alumina or silicon oxide are employed in shot blasting for removing rust or burrs, since they are excellent in cutting performance compared with metal shot media. However, in particular for silicon oxide, the media is apt to break since it is made of a needle crystals, and so reuse is difficult. When a surface of a work is stainless steel, aluminium alloy and the like is treated by steel grit or cast iron grit, the "inlaying phenomena" is caused wherein the shot media is embedded in, or pierces the surface, and rust is generated at this portion or rust is generated on the shot media itself. Glass beads form a thin glossy matt finish surface on the work and are excellent for impact effects. However, the smaller the beads are in diameter, the more the beads are apt to have static electricity, and so the beads adhere to the inside of equipment. Alternatively the shot media itself is shattered after a single shot and cannot be reused, since its mechanical strength is small.

Shot media of zircon or alumina can be excellent in impact effects when compared with glass beads. However, the mechanical strength is not sufficiently good to allow the shot media to be repetitively used, since the fracture toughness is low. Furthermore, the specific gravity thereof is small. Therefore, when the shot media diameter is small, the shot media adheres to the inside of equipment by static electricity. Alternatively it is not possible to use the shot on a work under constant conditions, due to shot powders worn by the shot or crushed shot media.

US-A-4035962 discloses the use of a zircon sand (ZrSiO₄), a naturally occurring material, as a shot medium. The particle size distribution is in the range of 0.044 to 0.149 mm.

There is no disclosure of the relative density or mean grain size of the material and indeed since the material is not sintered it seems unlikely that it should have a grain structure for which a grain size could be quoted.

It does not disclose the use of partially stabilised zirconia, nor does it disclose any of features (b), (c), (d), (e) or (f) of claim 1 of the present case.

EP-A-0351827 is not concerned with producing a shot media but is concerned with producing a mechanical structural material. It does not disclose or recognise the significance for a shot media of the features (a), (b) and (c) in achieving the improved properties of features (d), (e) and (f) of the claim 1 of this case.

One object of the present invention is to seek to solve these problems and to provide a shot media where rust does not form on the media itself, even when it is employed in a wet form, the surface of the work after the shot is smoother than when using glass beads, the specific gravity is larger than that of zircon or alumina shot agent, the shot agent is reluctant to adhere to the inside of shot equipment by static electricity, the shot media is excellent in impact effects and removal effects in' polishing, grinding and the like, no inlaying phenomenon is caused on the work, the shot media has sufficient mechanical strength and is not crushable, after-treatment process of a work, such as acid pickling, is not necessary since rust is not generated on the work, the shot media has high wear resistance, and the shot agent can maintain constant shot parameters and treatment with respect to the work even when repetitively utilized.

According to a first aspect of the present invention, there is provided shot media comprising sintered particles which is based on zirconia and each particle is composed of a sintered body of partially stabilized zirconia:
a) of which a substantial total quantity of the particles passes through a sieve having a normal aperture size of 2.36mm, but do not pass through a sieve having a normal aperture size of 0.02mm,
b) the particles having a mean relative density of not less than 95% of the theoretical density,
c) the particles having a mean grain size of no more than 1.0µm;
d) the particles having a mean Vickers hardness of no less than 1,000 kgf/mm²,
e) the particles having a mean compressive strength is not less than 40 kgf/mm², and
f) the particles having impact strength of not less than 7 x D^{-0.95} kgf/mm², wherein D is the diameter of the spherical particles.

The particles of the media may be (substantially) only zirconia, or preferably comprise at least 97% zirconia. The particles preferably comprise zirconia and one or more other materials such as stabilisers, for example yttria. If other substances are present, these may include Al₂O₃, Mgo and/or CeO₂.

In this specification, the "mean grain size", with respect to a sintered body, indicates a diameter of a circle having an area the same as another area measured by performing an image analysis on the size of each grain observed by a scanning electron microscope, when the shot media based on a zirconia sample receives thermal etching.

"Vickers hardness" indicates a value measured by "Testing method for Vickers hardness number of high performance ceramics" prescribed by JIS R 1610. The testing method is as follows. A Vickers hardness tester or a micro Vickers hardness tester is employed. An indentation is formed on a mirror-finished surface of a sample employing a square-based pyramidal diamond indenter having face angles of 136 degrees, under an applied load whereby no fracture of sample is caused. The value is calculated by the following equation from a surface area of permanent indentation obtained from the diagonal of indentation and the applied load. The applied load is selected from a range of 50 gf to 10 kgf in accordance with the size of sample, and the loading time is determined to be ten seconds. ${\text{Vickers hardness (kgf/mm}}^{\text{2}} {\text{) = 1.8544 F/d}}^{\text{2}}$ where F is the applied load (kgf) and d is the diagonal of the indentation in mm.

"Compressive strength" of a spherical shot media is a value provided by the following method.

In case that the particle size (d infra) of the spherical shot media is larger than 0.2 mm, based on "Testing method for compressive strength of high performance ceramics" prescribed by JIS R 1608, the sample is set between steel blocks having a thickness of not less than 10 mm which is heat-treated to Rockwell hardness of HRC 60±3, of a testing machine for strength characteristic prescribed by JIS B 7733, the load is applied at the crosshead speed of 0.5 mm/min, and the load is measured when the sample is fractured. In cases where the particle diameter (d infra) of the spherical shot media is no larger than 0.2 mm, a compression test mode of the testing machine for strength characteristics adopting a micro compression and measuring system of displacement is employed, the load is applied on the sample fixed between the top pressure indenter and the bottom pressure plate by an electromagnetic force at a constant increase rate, and the load is measured when the sample is fractured. However, if the sample is not fractured even when the load is applied thereon up to 500 gf, a load is measured when the sample deforms by 10%. The compressive strength is calculated by employing the following equation (Hirameteu, Oka and Kiyama "Journal of Mining and Metallurgical Institute", 81.10.24 (1965)).${\text{Compressive strength (kgf/mm}}^{\text{2}} {\text{) = 2.8P/πd}}^{\text{2}}$ where P is a measured value of the load (kgf) and d is a mean of a maximum size and a minimum size of a projected section in view from above when the shot media based on zirconia sample is disposed on a horizontal plane (mm).

"Diameter" of the spherical shot media indicates a height of the sample disposed on a zirconia plate in case of measuring the following impact strength. That is, the diameter indicates a distance between the zirconia plate and a plane, when the plane is lowered from above the sample while maintaining a parallel state with a face of zirconia plate, and the plane touches the sample. The mean particle diameter is preferably from 0.6 to 1.0 µm.

"Impact strength" is provided as follows. The spherical shot media is placed on a zirconia plate having the Young's modulus of 2.1 x 10⁴ kgf/mm², a weight of 120 g is dropped thereon, the drop height is elevated, the height whereby the shot media is fractured is measured and the impact strength is provided by the following equation:${\text{Impact strength (kgf/mm}}^{\text{2}} \text{) = 0.12 x h/V}$ where h is the height (mm) whereby the shot media is fractured and V is a volume of a sphere having a diameter which is equal to a height of the shot media disposed on the zirconia plate, or a distance between the zirconia plate and the plane, when the plane is lowered from above the sample while maintaining the parallel state with the zirconia plate and the plane touches the sample (mm³).

"Sphericity" of the spherical shot media is provided by the following equation.${\text{Sphericity = (4π x area of projected section)/(peripheral length)}}^{\text{2}} \text{.}$

A more detailed explanation of the invention will now follow.

### (a) Size of shot media

The size of the shot media based on zirconia should be defined by a condition wherein a substantially total quantity is under a sieve of nominal size of aperture of 2.36 mm. That is to say, a substantially total quantity should pass through the sieve of nominal aperture size of 2.36 mm (for instance, a nominal size of a standard sieve of metal wire cloth of 2.36 prescribed by JIS Z 8801).

The larger the size of shot media, the higher the impact effect. However, when the size of shot media is too large, in shot peening, the surface of the work becomes rugged and strain is caused therein. Therefore, it is necessary to make the surface of the work smooth by performing an electrolytic polishing treatment after the shot operation. In shot blasting, a number of a shot media which is shot per unit time is reduced and it is not possible to completely remove scale, any sprayed coating or the like. On the other hand, the smaller the size of shot media, the more easily the shot media can meet the high demands of recent years concerning the complexity of the shape of the work or surface condition such as smoothness, dimension accuracy, reflectivity and gloss of surface. However, in shot blasting, when the shot media is too small, the classification of rust or metal powder removed from the work by the shot operation and the shot media becomes difficult. It is more preferable that the size of shot media is in a range wherein a substantial total quantity of shot media is over a sieve of nominal aperture size of 0.02 mm and under a sieve of nominal aperture size of 2 mm.

The effect of the shot operation used on the work is governed by conditions of the shot rate, the shot distance, the shot angle and the like. Therefore, it is necessary to control the shot media size and the distribution of the shot media by a classifier or by a sieve, in consideration of achieving a balance between the shape and material of the work and these shot conditions.

### (b) Density

The mean relative density against the theoretical density of the zirconia is preferably no less than 95%, and suitably from 95.5 to 99.7%.

"Theoretical density" is a density which is calculated by dividing a mass of atoms in a unit lattice by a volume of the unit lattice provided by an X-ray diffraction method.

"Mean relative density" can be calculated by dividing the measured density of a sintered body (a plurality of zirconia based shot media) by the theoretical density.

When the mean relative density against the theoretical density is smaller than 95%, the wear resistance and the mechanical strength may be poor, the shot media may shatter when it is shot on the surface of the work, the shot media can wear after repetitive use, and the worn and shattered shot media may adhere to the inside of equipment due to static electricity in the shot operation. It is preferable if the mean relative density against the theoretical density is not less than 97%. The density of a sintered body can be measured by "Testing method for specific gravity of artificial abrasives" prescribed by JIS R 6125.

As for the shape of the shot media, usually there is grit of a random shape and spherical shot. Since the shot has a large effect on impinging the surface, strain is apt to be caused on the crystal particles by its reactive force when the work is a metal. The larger the sintered density of the shot media, the larger the degree of strain. The sintered density of the shot media based on zirconia is suitably approximately 6, which is comparatively large compared with 2.5 of glass or 3.8 of alumina and is near to 7 of steel. The preferred (average) relative density of the particles of the media ranges from 5.23 to 6.12, such as from 5.71 to 6.10. Therefore, the degree of strain is increased. Accordingly, it is necessary to adjust the shape of the shot media, the shot pressure, the shot distance, the shot angle and the nozzle size, such that the work is provided with the "arc height value" suitable for the material, by employing an Almen strip and a gauge. (An Almen strip is a test piece which is employed in a simplified method that has been developed for measuring parameters of shot peening by Mr. J.O. Almen of the General Motor Co., which measures the strength of shot peening. A single part of the test piece selected from three kinds of tests pieces A, N and C) is placed in a protective instrument, in which a shot peening is performed. The test pieces will be swollen and bent into a convex shape in the direction of shot peening. The height of the bent portion is measured by a gauge, and the measured value is determined to be the strength (arc height value) of shot peening. This method of measuring is prescribed in shot peening manuals of SAE; ANS2430 and MILS-13165.)

### (c) Mean grain size

The mean grain size of a zirconia of the shot media based on zirconia is no more than 1.0 µm. Preferably the mean grain size is from 0.4 (or 0.5) to 0.7 µm.

The "mean grain size" can designate the size of a crystal particle of the shot media (a sintered body is usually polycrystalline). However, the "mean particle diameter", which is different from "mean grain size", can be the particle diameter of a base powder of the shot media, which is represented by a diameter of a sphere having a volume the same as that of a secondary coagulated particle, that is a median value of a volume standard distribution of powders ultrasonically-dispersed in water as a dispersing agent, measured by employing a super-centrifugal type particle distribution measuring instrument (made by Horiba Seisakusho K.K.: CAPA700).

If the mean grain size of the (zirconia based) shot media exceeds 1.0 µm, where shot operations are performed under high shot pressure the tetragonal zirconia may transform into monoclinic zirconia due to the stress, which can increase the consumption of the shot media and deteriorate the surface condition of the work, which is not desirable. It is preferable that the mean grain size is no more than 0.7 µm. However, the lower limit of the mean grain size of a normally provided sintered body based on zirconia is suitably approximately 0.2 µm, such as when the mean relative density against the theoretical density is no less than 95%.

### (d) Vickers hardness

The mean Vickers hardness of the shot media based on zirconia is no less than 1,000 kgf/mm², and preferably in the range of from 1,100 to 1,500 kgf/mm². Preferably the hardness is from 1150 to 1420, such as from 1200 to 1350 kgf/mm².

When the mean Vickers hardness is below 1,000 kgf/mm², the working speed of the work can be retarded and the consumption or the size reduction ratio of the shot media may become considerable, which is not desirable.

Furthermore, when the Vickers hardness exceeds 1,500 kgf/mm², the consumption of the work increases (depending on the material of the work).

### (e) Compressive strength

The compressive strength of the shot media (based on zirconia) is not less than 40 kgf/mm². Preferably it is at least 45 kgf/mm², such as from 60 to 250 kgf/mm².

If the mean compressive strength is not less than 40 kgf/mm², the wear resistance and the mechanical strength of the shot media can be high. The shot media (based on zirconia) is hard to crush when it is shot on the surface of the work, and so this shot media based on zirconia can be hard to wear even when it is shot repetitively.

### (f) Polycrystalline zirconia and suitable tetragonal phase content

It is preferable that the shot media (based on zirconia) contains not less than 70 mole% of tetragonal phase content (in polycrystalline zirconia). Preferably the content of the tetragonal phase is at least 85%, such as from 95 to 100%.

The sintered body, based on zirconia, having not less than 70 mole% of tetragonal phase content in polycrystalline zirconia may provide toughness and strength. It is preferable that this condition is satisfied and the monoclinic phase content in polycrystalline zirconia is less than 5 mole% and/or the cubic phase content in the polycrystalline zirconia is less than 30 mole% among the zirconia crystal phase.

The content of the respective crystal phases in the zirconia polycrystal are as follows. The section of the sintered body is finished to a mirror surface by a diamond wheel having a particle diameter of from 1 to 5 µm. The area intensities are provided by diffraction patterns of the respective crystal phases by X-ray diffraction of the surface and the results are fed into the following equations.$\begin{matrix}\begin{matrix}{\text{M(monoclinic zirconia mole%) = [{I}}_{\text{m(111)}} {\text{+I}}_{\text{m(111)}} {\text{}/{I}}_{\text{m(111)}} {\text{+I}}_{\text{m(111)}} {\text{+I}}_{\text{c+t(111)}} \text{}] x 100} \\ {\text{C(cubic zirconia mole%) = [I}}_{\text{c+t(111)}} {\text{/{I}}_{\text{m(111)}} {\text{+I}}_{\text{m(111)}} {\text{+I}}_{\text{c+t(111)}} {\text{}] x [I}}_{\text{c(400)}} {\text{/{I}}_{\text{c(400)}} {\text{+I}}_{\text{t(400)}} {\text{+I}}_{\text{t(004)}} \text{}] x 100} \\ \text{T(tetragonal zirconia mole%) = 100 - M - C}\end{matrix}\end{matrix}$ where the suffix m designates monoclinic zirconia, the suffix c cubic zirconia, the suffix t tetragonal zirconia and the suffix c+t both cubic and tetragonal zirconia; the contents of the brackets, or (), designates Miller index and I with these suffixes designates the area intensity in a respective Miller index of respective crystal phase.

### (g) Components

Rare earth oxides such as MgO, CaO, Y₂O₃, and CeO₂ can be employed as stabilizers suitable for the sintered body (based on zirconia). If the tetragonal phase content in polycrystalline zirconia is not to be less than 70 mol%, it is preferable that, for instance, in case of Y₂O₃, the molar ratio of Y₂O₃/ZrO₂ is in the range of from 1.5/98.5 to 4.0/96.0. If the molar ratio is less than 1.5/98.5, the content of monoclinic zirconia increases while the tetragonal zirconia decreases, and a high-strength shot media may not be achieved by employing transformation of the tetragonal zirconia into monoclinic zirconia. On the other hand, if the molar ratio exceeds 4.0/96.0, the tetragonal zirconia decreases and the cubic zirconia becomes the major component, and, therefore, the grain size becomes large. The toughness and strength may then be lowered.

Furthermore, materials other than ZrO₂ and Y₂O₃, Aℓ₂O₃, TiO₂, MgO, CaO, a rare earth oxide and the like may be coexistent. Among these, substances with low melting points, such as Aℓ₂O₃, TiO₂, and the like, can lower the sintering temperature of zirconia due to its low melting point. MgO, CaO, CeO₂ or the like can dissolve into the zirconia crystal to constitute a solid solution and lower the sintering temperature, which is advantageous in manufacturing the shot media. It is preferable that these substances, if present, are employed in a range of from 0.05 to 30 wt%, with respect to the total of ZrO₂ and Y₂O₃. If the content is larger than 30 wt%, the inherent property of zirconia can be lowered and so lower the toughness. The shot media may shatter during shot operation and so the quantity of wear loss can increase.

### (h) Impact strength

The mean impact strength of the shot media (based on zirconia) is not less than 7 x D^{-0.95} kgf/mm² (where D is the mean diameter (mm) of the shot media). When this condition is satisfied, cracking of the shot media and the quantity of wear loss-can decrease. If the impact strength is lower than this criteria, the wear resistance and the mechanical strength may become low, so the shot media may be apt to shatter when it is shot on the surface of the work and also the shot media may be apt to wear by repetitive shot operations. When the impact strength satisfies this value, the condition where the above mean compressive strength is not less than 40 kgf/mm², is satisfied.

### (i) Sphericity

If the shot media is spherical, it is preferable that the mean sphericity is not less than 0.9. Preferably, it is at least 0.93, such as from 0.93 to 0.97.

Although there is no restriction on the shape of the shot media of this invention, it is preferable that the shape is similar to a sphere, especially if the uniformity of the quantity of shots and the uniformity of the motion of the shot media can be problematic. It can be easy to make constant the quantity of shots by having the mean sphericity at no less than 0.9. This may reduce the roughness and the strain of the surface of the work, and the product can be an excellent ornamental effect. It is not necessary that the shot media employed in shot blasting is spherical in cases where there is no requirement for shot quantity. The shot media may also be provided in a grit-like form having a random and edged shape as in the conventional shot media.

The shot media of the invention, suitably based on zirconia, can be manufactured as follows. Zirconia based powders can be provided by a fusing method, a hydrolysis method, a neutralization-coprecipitation method, a hydrolysis-neutralization method, a hydrothermal-oxidation method, a thermal decomposition method, an alkoxide hydrolysis method or similar process. These are granulated by a tumbling granulating method, an extrusion granulating method, a compression granulating method, an agitation granulation method, a liquid phase granulating method or similar process to meet particle diameter, particle diameter distribution and any other parameters which are required of the shot media. Alternatively a powder based on zirconia is converted into a slurry and granulated by a spray and drying method such as a spray granulating method or the like. The resulting spherical green body is sintered at a temperature of from 1,300 to 1,600°C.

The compressive strength of the sintered body can be promoted if the shot media based on zirconia obtained by the primary sintering is treated by a hot isostatic press (HIP). If of spherical shape, it is possible to promote compressive strength or impact strength of the sintered body by polishing the surface, e.g by a barrel polishing and the like after sintering, so that defects or cracks (the size of which exceeds 10 µm) may not be present on the surface or in the vicinity thereof.

As previously stated, the shot media of the invention may be excellent in its impact power, polishing power and grinding power, and yet the roughness and the strain of the surface of the work may be small. The shot media may be excellent in wear resistance, mechanical strength, hardness and the like. Therefore, reclamation and reuse of the shot can be easy.

It is possible to perform shot blasting treatment by using this shot media, as in removing old sprayed coating of ceramics which is hard to remove, without impairing the surface of the substrate or enhancing the strain either in conventional technology or as in surface preparation, without generation of rust.

Furthermore, it is possible to perform not only surface treatment for providing wear resistance on a mirror finished surface of alloy, but also shot peening treatment with the purpose of providing ornamental effects of the mirror finished face of a product of stainless steel or an aluminium alloy or a surface of resin, as a substitute to buffing.

It is possible to perform refining treatment by using the shot media based on the invention which can meet severe requirements with respect to complicated shapes of the work or appearance-oriented surface properties such as accuracy in surface roughness, dimensional accuracy, reflectivity, gloss and the like of a finished face.

The second aspect of the invention relates to a process for the preparation of a shot media, the process comprising sintering particles that comprise zirconia and each particle is composed of a sintered body of partially stabilized zirconia so that the particles:
(a) pass through a sieve having a normal aperture size of 2.36mm, but do not pass through a sieve having a normal aperture size of 0.02mm,
b) have a mean relative density of not less than 95% of the theoretical density,
c) have a mean grain size of no more than 1.0µm;
d) have a mean Vickers hardness of no less than 1,000 kgf/mm²,
e) have a mean compressive strength is not less than 40 kgf/mm², and
f) have a mean impact strength of not less than 7 x D^{-0.95} kgf/mm², wherein D is the diameter of the spherical particles.

Preferably the process involves using a powder having a molar ratio of ZrO₂/Y₂O₃ of from 98.5/1.5 to 96/4, a mean particle size of from 0.5 to 2.0 µm and/or a BET specific surface area of from 3 to 12 m²/g. Suitably sintering is at a temperature of from 1300 to 1600°C.

Suitably the powder is treated by a hot isostatic press (HIP). Alternatively, or in addition, the powder is granulated by an agitation granulator, tumbling granulator and/or spray drying granulator.

Preferred features and characteristics of the second aspect are as for the first mutatis mutandis.

The shot media of the invention applicable in the following fields.

Automobile components and engine parts of a variety of vehicles such as front axle beam, wheel cap, leaf spring, crank shaft, piston ring, rocker arm, camshaft, gear wheel parts, cylinder, steering knuckle, spiral spring, connecting rod and the like; metal parts for aircraft and its engine parts such as turbine blade of a jet engine; ship equipment and its engine parts such as screws and the like, reactors in chemical and petrochemical plants; equipment associated with machines as in pressing; machine tools such as index head, centre, chuck and the like; armamentarium such as scalpel, pincette, injection needle and the like; artificial aggregate such as stem; dental instruments such as teeth and fangs, which are the targets of shot peening with the purpose of prolonging the fracture limit due to fatigue, stress corrosion or intergranular corrosion of metal such as various stainless steels and their weld deposit surfaces.

Household or business kitchen utensils such as dinner set, spoon, fork, knife, pan, iron pot, frying pan and the like; industrial or general cutlery such as stainless knife, cutters, forged cutlery and the like; house equipment such as in kitchen systems and in scullery, kitchen utensil, labatory-dressing table; house material such as lumber room, garage, gate, and fence; indoor and outdoor ornaments such as decoration plate, wall decorations and door plate; electric appliances such as television set, videocassette recorder, electric refrigerator, washing machine and dryer; office automation equipment such as word processor and personal computer; heating and cooling equipment such as air conditioner and stove; smoking parts such as cigarette lighter and ashtray; optical instrument such as camera and microscope; life and leisure equipment such as golf equipment, camping outfit, bicycle, motor cycle, automobile, yacht, motor boat, and suit case; jewel such as wrist watch, gold and silver plate, ring, necklace, champion cup, shield, medal and badge; promotion of merchandise value or design by forming a mat finished surface on surfaces of metal, resin, glass, wood, stone, ceramics and the like, as in the inner face of a hood for an illuminating light and labour saving in mat finished surface forming and in an after treatment process; deburring or surface cleaning of a variety of machine working parts and metal, resin, ferrite, ceramics product or the like which is formed by extrusion moulding, slip casting, injection moulding or the like; surface roughening for adhering adhesives, paints, glaze and a thermal spray material or for promoting their adhesion effects; removing of contamination on a soldered face, a hardening coat after electrical-discharge machining, steel after quenching, weld burr, rust, old spray deposit, plated coat, painted film, enamel and the like; internal cleaning of an internal pressure vessel such as various cylinders; and polishing, grinding or blast cleaning before repair of various dies and die parts, automobile parts, various vehicle parts or machine parts.

The invention will now be described with reference to the following Examples which are not to be regarded as being restrictive.

### EXAMPLES 1 to 6 and COMPARATIVE EXAMPLES 1 to 4

Powders based on zirconia having the properties shown in Table 1 were provided by the hydrolysis method from a raw material of zirconium oxychloride solution having the concentration of 50 g/ℓ, to which was added yttria so that the converted molar ratio of ZrO₂/Y₂O₃ became as shown in Table 1. Those media having components in addition to ZrO₂ and Y₂O₃ have the percentage by weight of all components present shown in Table 1A. The powders were ground by dry-grinding. Nuclear particles for granulation having the size of approximate 0.1 mm were provided by an agitation granulator and the nuclear particles for granulation were grown further by the agitation granulator. The particle size distribution of the grown granule had a size (including approximately sintering shrinkage) that was controlled by a sieve of a nominal aperture size of 2.83 to 0.020 mm thereby providing a formed spherical green body. A sintered body based on zirconia was provided by sintering under the conditions shown in Table 2. In Examples 3 and 4 and Comparative Example 4, the HIP treatment was performed for one hour under a pressure of 150 MPa at a temperature of 1,500°C. The resultant sintered body was screened by a sieve of a nominal aperture size of 2.36 mm and the over-sieve portion was removed and was used in the shot peening and shot blasting tests.

### EXAMPLES 7 to 9 and COMPARATIVE EXAMPLE 5

Powders based on zirconia were provided by adding high purity alumina powders (Sumitomo Chemical Co., Ltd. AKP-30) having a mean particle diameter of 0.3 to 0.5 µm to powders based on zirconia obtained by Example 1 or the like, at the weight % shown in Table 1. They were ground and mixed by wet-grinding employing a vibrating ball mill, dried and ground by dry-grinding. Sintered zirconia was provided by using the same conditions of Example 1 or the like. In Examples 8 and 9, the HIP treatment was performed under the same conditions as in Example 3. The products were saved for the shot peening and the shot blasting tests.

### EXAMPLE 10

As granulation, nuclear particles for granulation having a size of approximately 0.1 mm provided by an agitation granulator were grown by a marumerizer, and the particle size distribution of the granules (having a size including approximately sintering shrinkage) was controlled by a sieve of nominal aperture sizes of 2.83 to 0.020 mm thereby obtaining formed spherical green bodies. Other than this, the test was performed under the conditions shown in Examples 1 to 6 and Comparative Examples 1 to 4.

### EXAMPLES 11 to 13 and COMPARATIVE EXAMPLE 6

As granuled powder for sintering, granules were granuled and dried by a spray dryer from a slurry based on zirconia converted from the powders based on zirconia obtained by Example 1 were employed. In Example 13, the granules were sintered under the same conditions as in Example 3 and the HIP treatment was then performed. Other than that, the test was performed under the same conditions as in Examples 1 to 6 and Comparative Examples 1 to 4.

### EXAMPLES 14 and 15

As granuled powder for sintering, granules which were granuled and dried by a spray dryer from a slurry based on zirconia (converted from the powders based on zirconia including alumina) was obtained under the same conditions as in Example 7 were employed. In Example 15, bubbles in the slurry were removed by an antiforming agent, and the slurry was supplied for granulation and drying. Other than that, the test was performed under the same conditions as in Examples 1 to 6 and Comparative Examples 1 to 4.

### EXAMPLES 16 to 22 and COMPARATIVE EXAMPLES 7 to 12

The powders based on zirconia provided by Example 1 were added with other components shown in Table 1 by the weight % shown therein, which were ground by wet-grinding for 8 hours by an attrition mill, and dried thereby providing powders based on zirconia. Nuclear particles for granulation having a size of approximately 0.1 mm were provided by an agitation granulator, which were further grown to spherical green bodies having a size (including approximately sintering shrinkage) by a tumbling granulator, and sintered under the conditions shown in Table 2 thereby providing the sintered body based on zirconia. The sintered body was provided with gloss on its surface by barrel polishing and was finished until large defects were not found on its surface by observing an optical microscope having magnification of 50, thereby making a shot agent. The shot agent was used for the measurement of the impact strength and the shot peening and the shot blasting tests.

### COMPARATIVE EXAMPLES 13 and 14

The shot peening and the shot blasting tests were performed with respect to a spherical body of sintered alumina (Naigai Ceramics Co., Ltd., aluminite "A" ball; density of sintered body: 3.8 g/cm³; mean particle diameter: 1.9 mm) (Comparative Example 13) and glass beads (Union Co., Ltd. UB-810L; mean particle diameter; 145 µm) (Comparative Example 14).

In the former case, a spherical body of sintered alumina was subjected to destruction by performing repetitive shot operations and it was observed that the density of the sintered body was low. However, the deformation depth of the surface of the work was small and the surface roughness was large. In the latter case, the beads were destructed by a single shot operation to a degree whereby the beads could not repetitively utilized.

The property of zirconia powders for making shot media in these examples is shown in Table 1, the sintering conditions in Table 2, the property of the shot media in Tables 3 and 4, and the results of the shot peening and the shot blasting tests employing the shot media in Table 5.

The particle diameter distribution of the shot media (sintered bodies under a sieve of nominal sizes of apertures of 2.36 mm) was measured by laminating sieves of nominal sizes of apertures of 2.36, 2.00, 1.70, 1.40, 1.18, 1.00, 0.850, 0.710, 0.600, 0.500, 0.425, 0.355, 0.300, 0.250, 0.212, 0.200, 0.180, 0.150, 0.125, 0.100, 0.090, 0.075, 0.063, 0.053, 0.045, 0.038, 0.025 and 0.020 (unit: mm) in an order from the smallest nominal sizes of apertures successively on a saucer, and by shaking them by a ro-tap shaker for 5 minutes. Among the sieves containing the screened samples, the nominal sizes of apertures of a sieve on top of the uppermost sieve were determined as an upper limit of the particle diameter distribution, and those of the lowermost sieve was determined to be the lower limit of the particle diameter distribution.

The shot peening test was performed by employing a pneumatic nozzle with compressed air having a gauge pressure of 4 kgf/mm². The treatment was performed repetitively for 3 times wherein the shot time in a single treatment was 120 minutes, with the work of stainless steel (type 316) having the thickness of 5 mm. The size reduction ratio was calculated as follows. A sieve of nominal aperture size of 0.020 mm was laminated on the saucer, and a sieve of nominal aperture size corresponding to approximately 1/3 of a mean value of the upper limit and lower limit of the particle diameter distribution of shot media before the shot operation, on which 100 g of shot media after the shot operation was supplied, and which was screened by vibrating it for 5 minutes by the ro-tap shaker. The screened weight was fed into the following equation and the size reduction rate was calculated thereby.$\text{Size reduction ratio (wt%) = {A/(100-B)} x 100}$ where A is a quantity of sample in the sieve of nominal sizes of apertures of 0.020 mm (g) and B, the quantity of sample in the saucer (g).

The depth of the surface deformation and the surface roughness (Ra: mean roughness of centre line) after shot-peening the surface of the work, were also measured.

The shot blasting test was performed employing an examination piece which was provided by plasma-spraying powders of partially stabilized zirconia (TOSOH CORPORATION TZ-3Y: Y₂O₃: 3 mol%) on a blast-treated carbon steel (SS41: 50 mm x 50 mm x 5 mm) until the film thickness was 200 µm. The shot blasting test was performed by shot-blasting the shot media based on zirconia on to the examination piece from a nozzle having a bore of 6 mm by compressed air at a gauge pressure of 5 kgf/cm² under the conditions of shot distance of 30 cm and shot angle of 60°. The grinding conditions of the sprayed face of the examination piece was observed and the size reduction ratio of the shot media was found similar to the shot peening test.

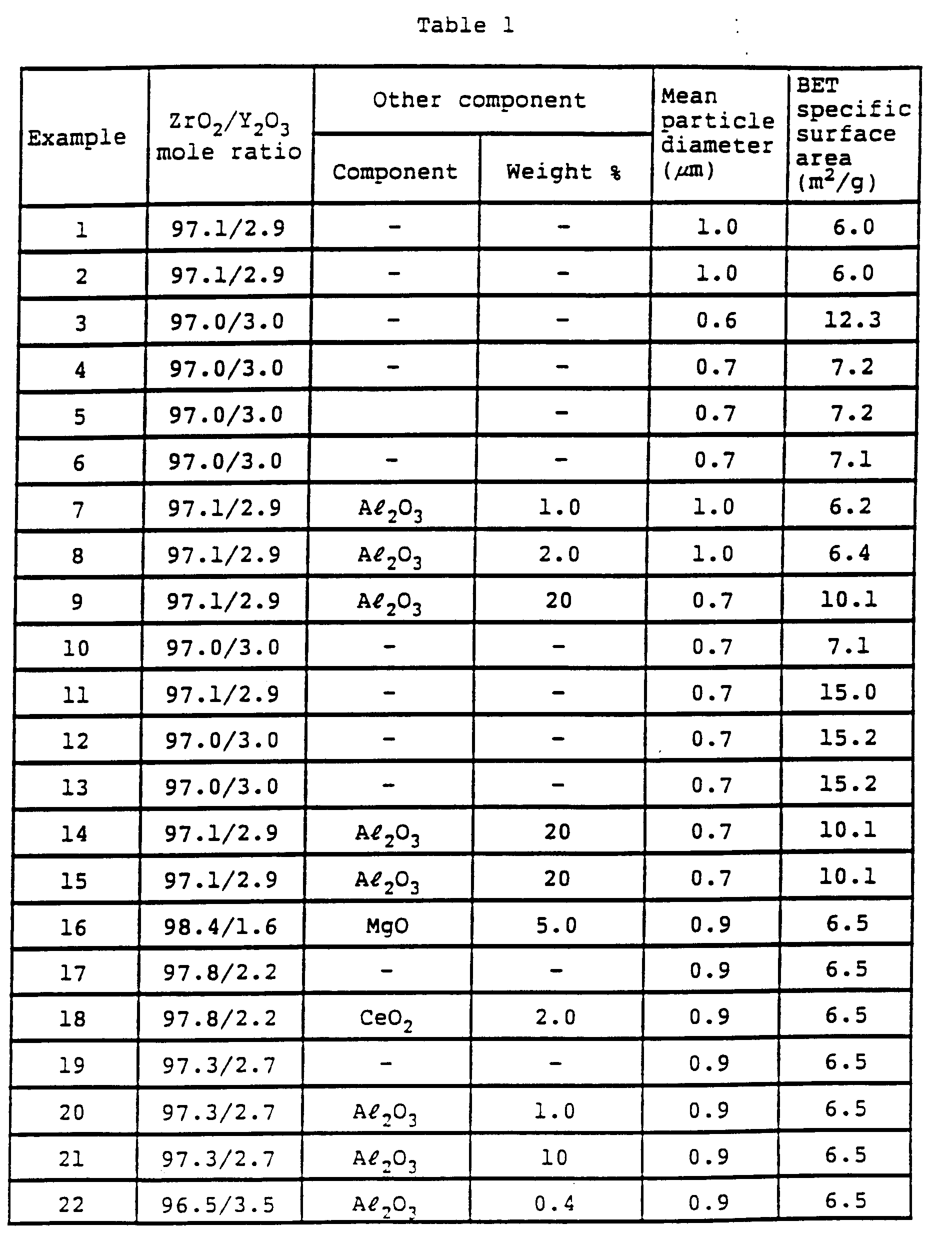

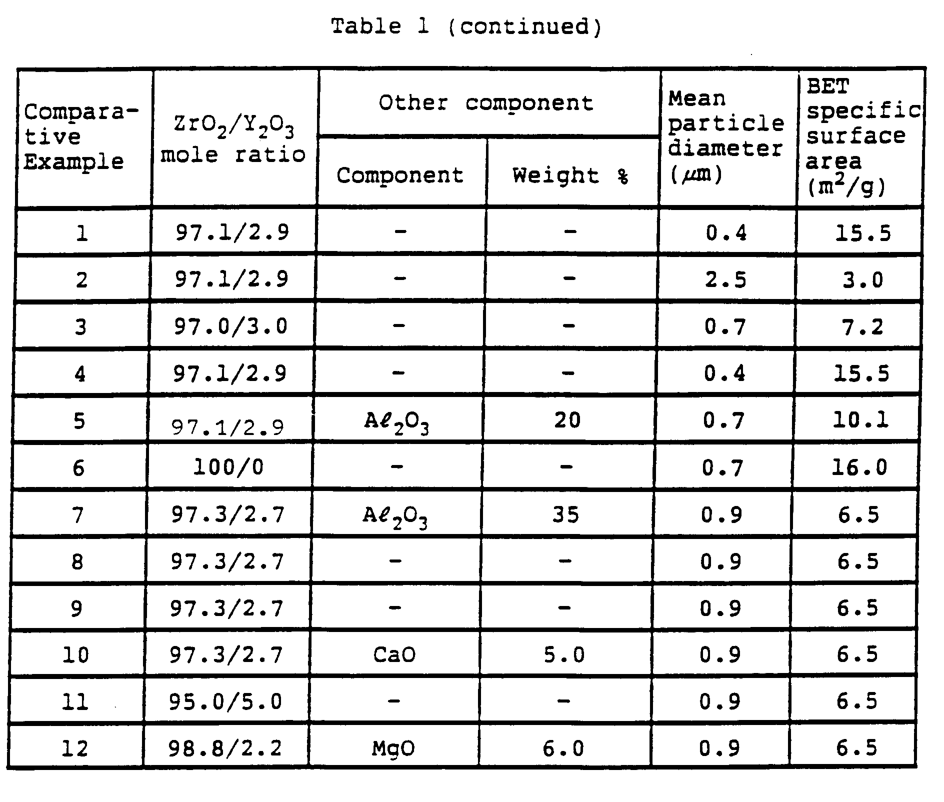

**Table 1A**

| | Other Components | | wt% of ZrO₂ | | wt% of Y₂O₃ | |
|---|---|---|---|---|---|---|
| | Component | wt% | | | | |
| Example 7 | Aℓ₂O₃ | 1.0 wt% | ZrO₂ | 93.85 wt% | Y₂O₃ | 5.15 wt% |
| 8 | Aℓ₂O₃ | 2.0 wt% | | 92.9 wt% | | 5.1 wt% |
| 9 | Aℓ₂O₃ | 20 wt% | | 75.8 wt% | | 4.2 wt% |
| 14 | Aℓ₂O₃ | 20 wt% | | 75.8 wt% | | 4.2 wt% |
| 15 | Aℓ₂O₃ | 20 wt% | | 75.8 wt% | | 4.2 wt% |
| 16 | MgO | 5.0 wt% | | 92.3 wt% | | 2.7 wt% |
| 18 | CeO₂ | 2.0 wt% | | 94.1 wt% | | 3.9 wt% |
| 20 | Aℓ₂O₃ | 1.0 wt% | | 94.2 wt% | | 4.8 wt% |
| 21 | Aℓ₂O₃ | 10 wt% | | 85.6 wt% | | 4.4 wt% |
| 22 | Aℓ₂O₃ | 0.4 wt% | | 93.4 wt% | | 6.2 wt% |
| Comparative Example 5 | Aℓ₂O₃ | 20 wt% | | 75.8 wt% | | 4.2 wt% |
| 7 | Aℓ₂O₃ | 35 wt% | | 61.8 wt% | | 3.2 wt% |
| 10 | CaO | 5.0 wt% | | 90.4 wt% | | 4.6 wt% |
| 12 | MgO | 6.0 wt% | | 90.3 wt% | | 3.7 wt% |

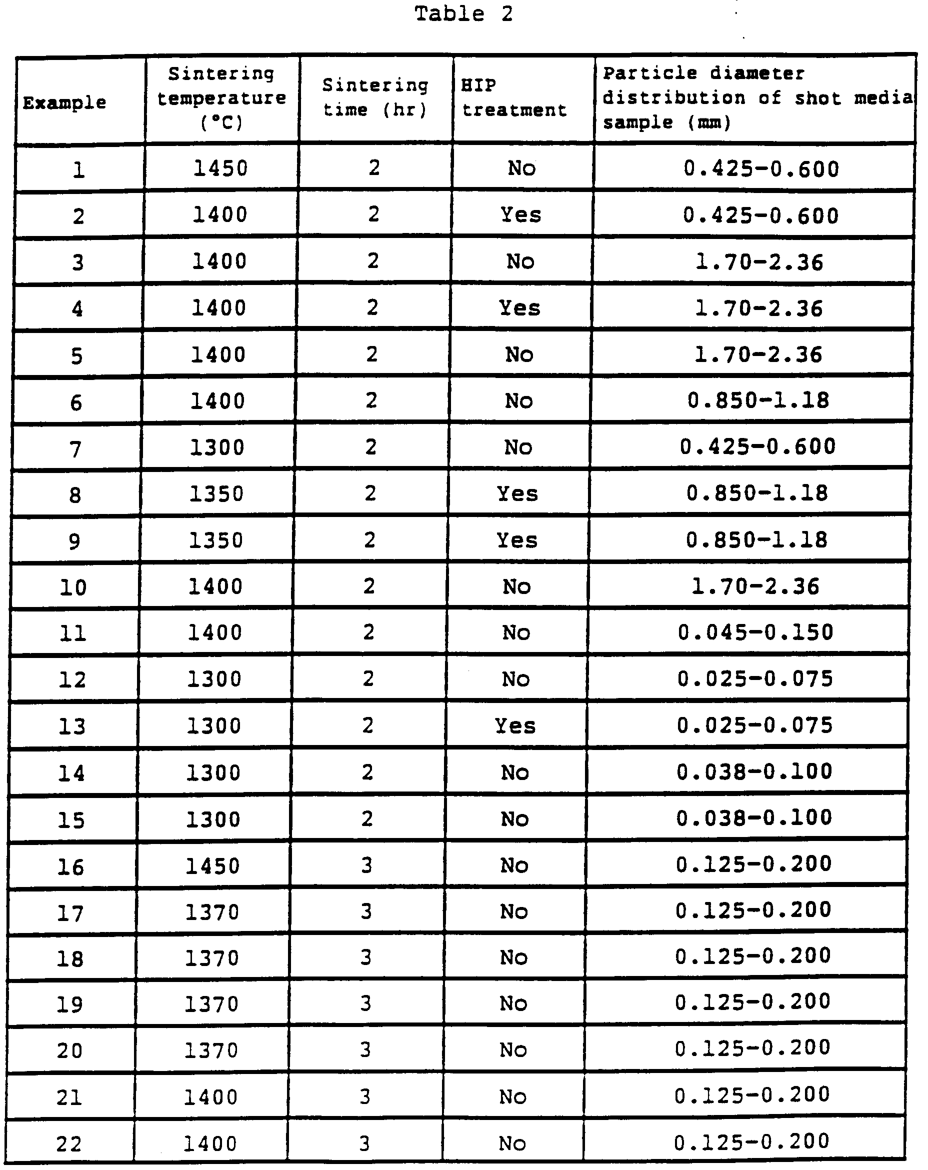

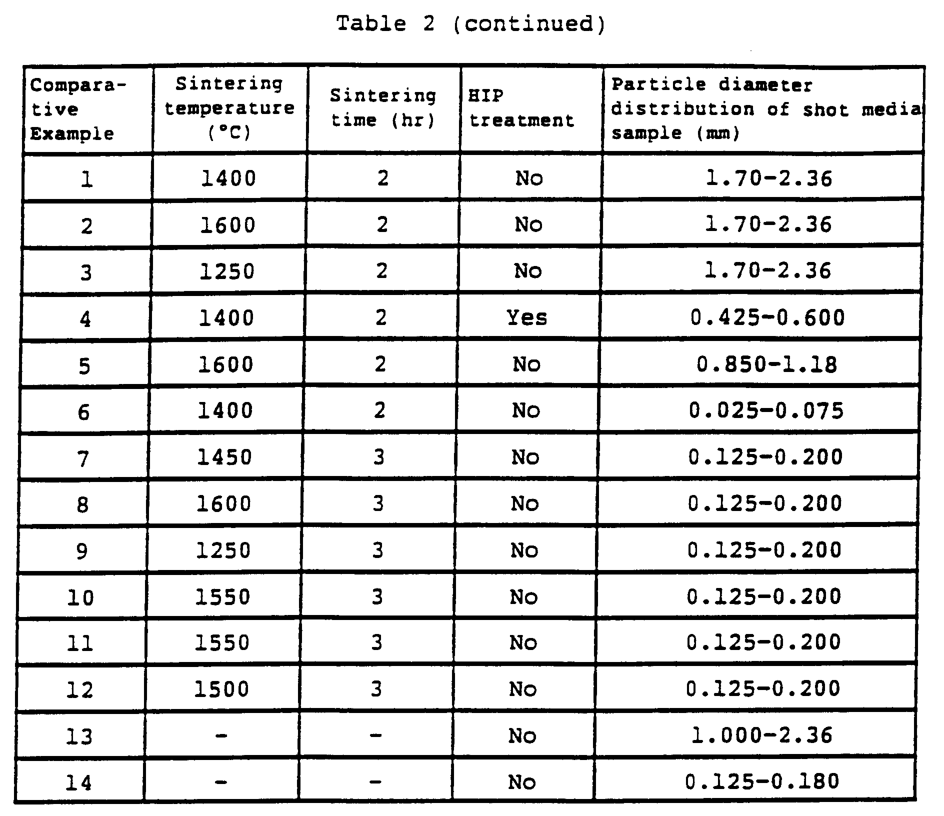

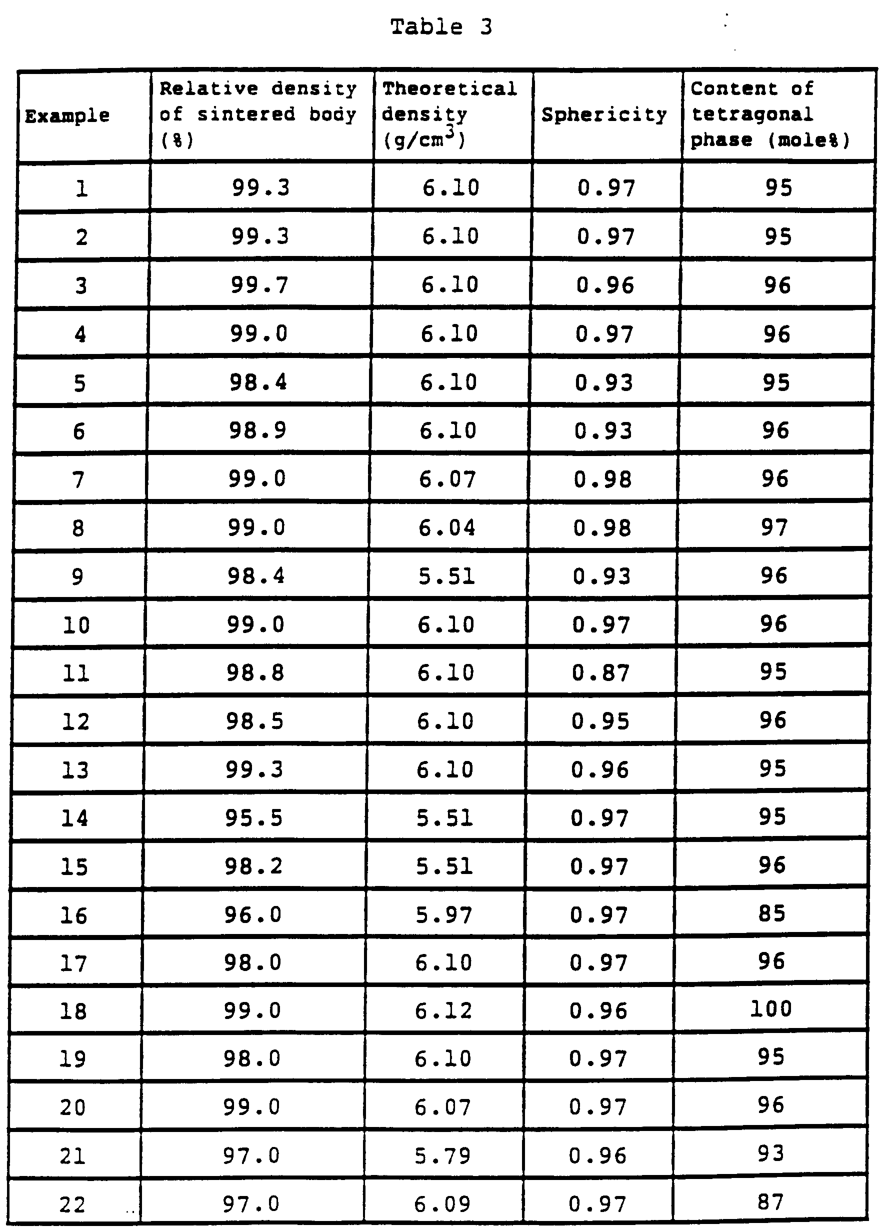

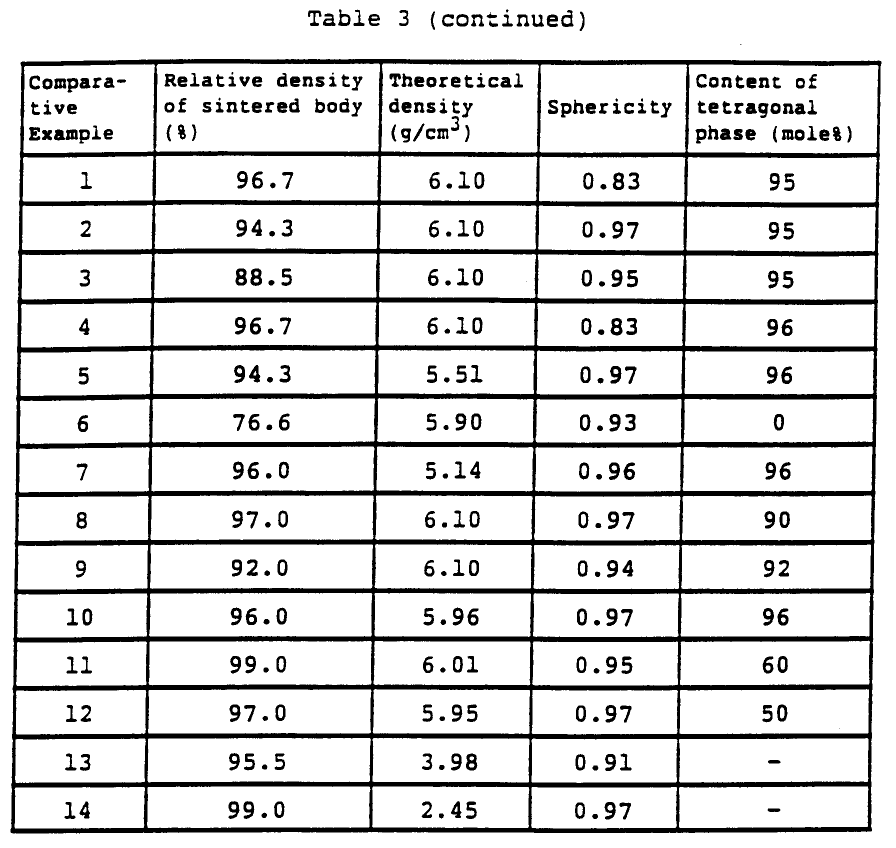

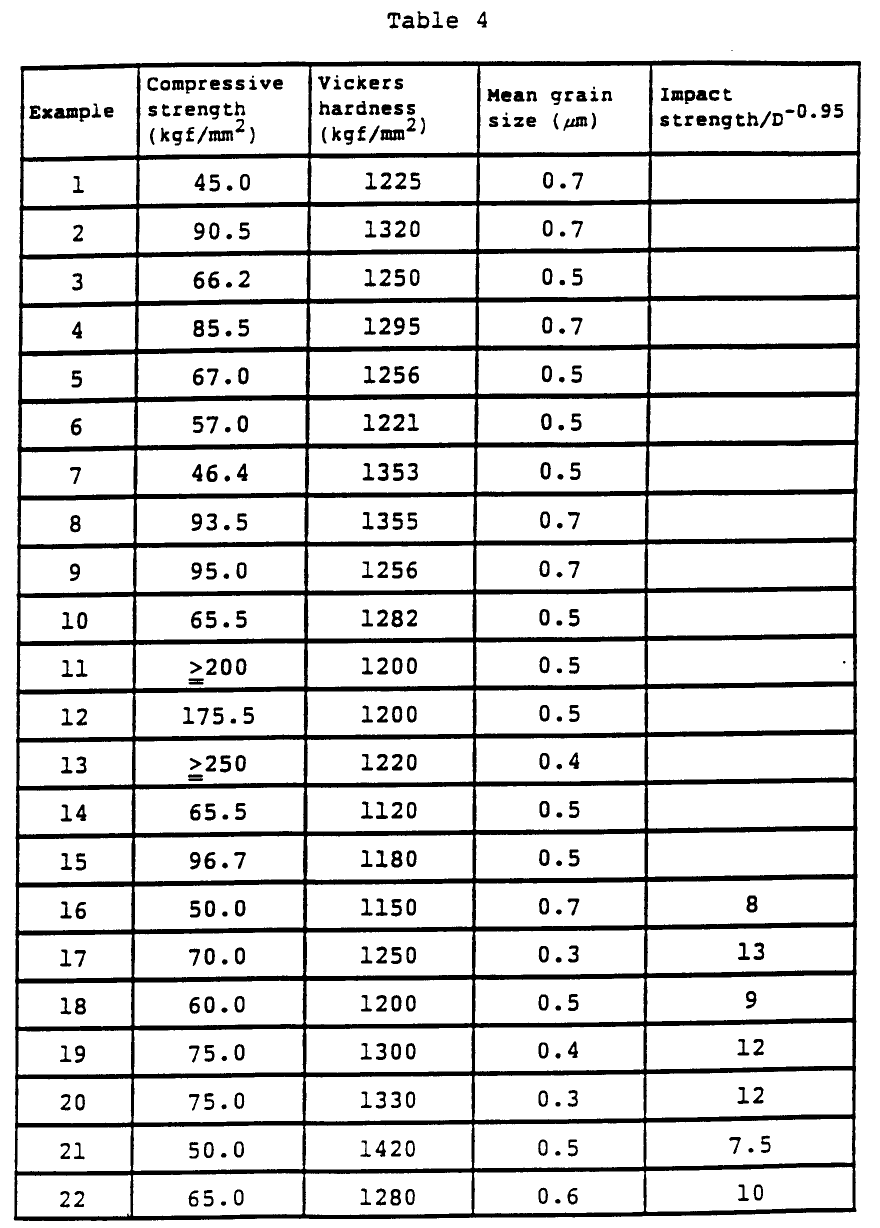

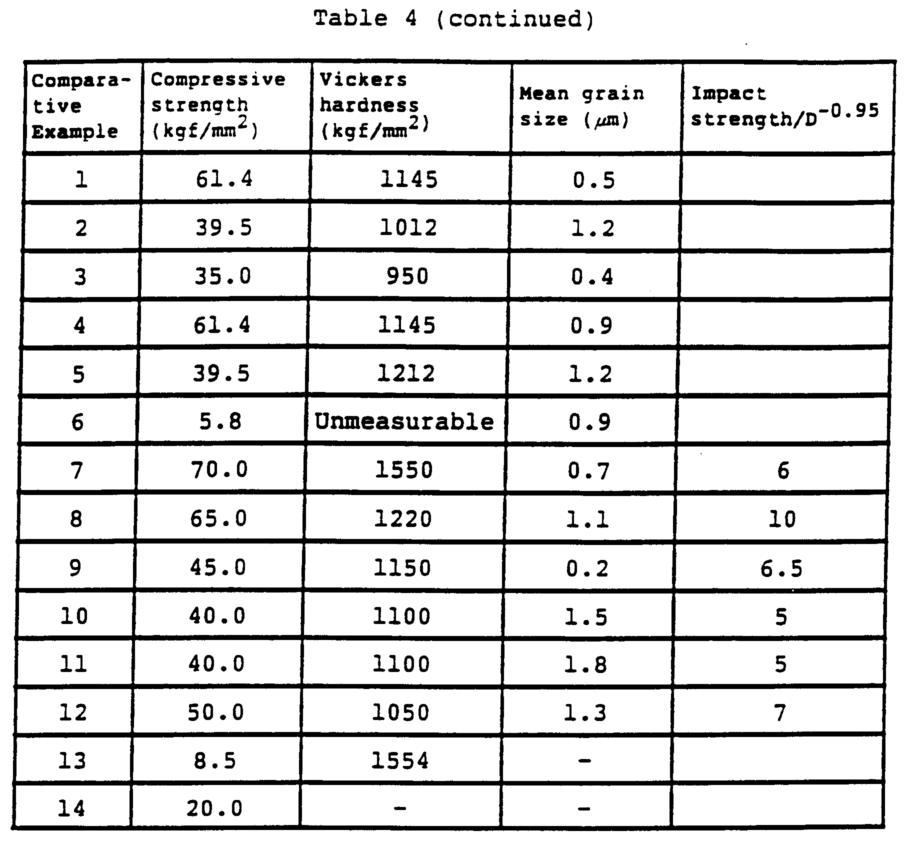

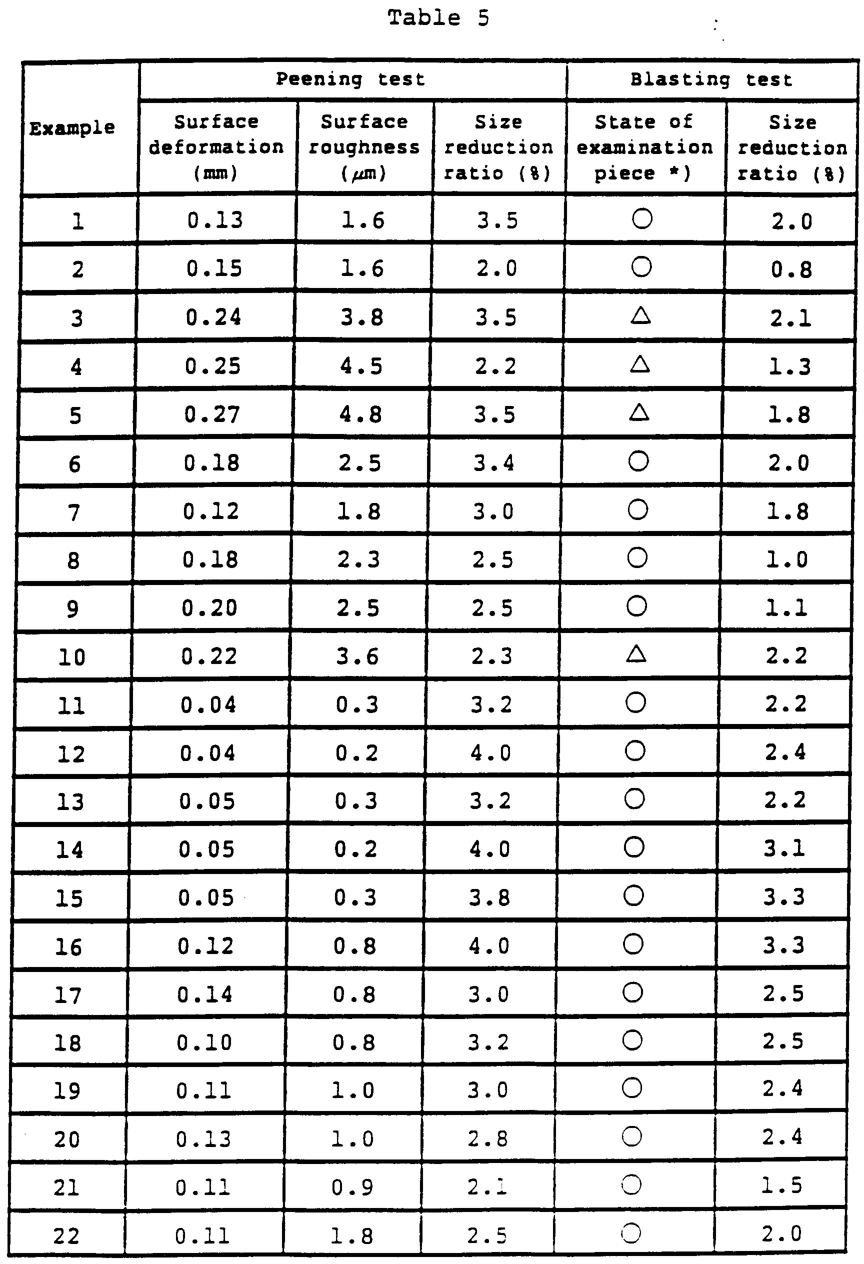

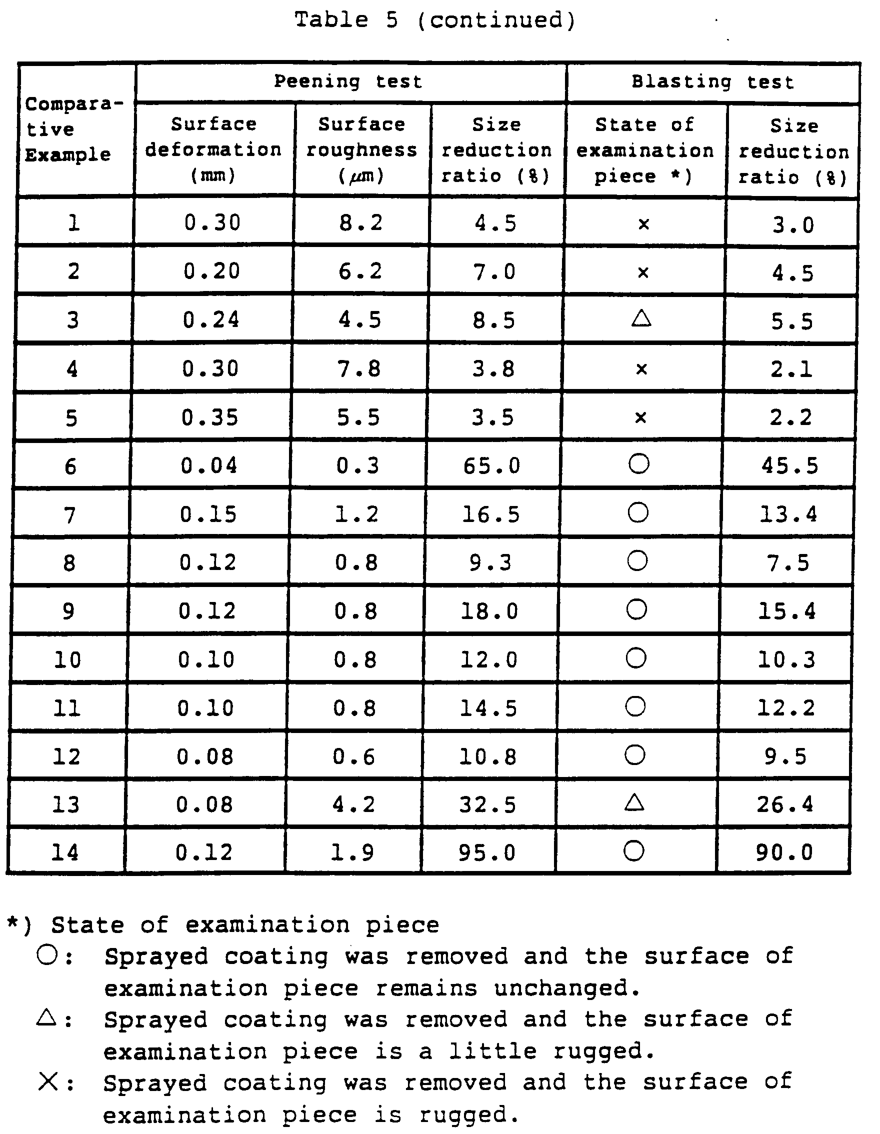

## Claims

1. Shot media comprising sintered particles which is based on zirconia and each particle is composed of a sintered body of partially stabilized zirconia:
a) of which a substantial total quantity of the particles passes through a sieve having a normal aperture size of 2.36mm, but do not pass through a sieve having a normal aperture size of 0.02mm,
b) the particles having a mean relative density of not less than 95% of the theoretical density,
c) the particles having a mean grain size of no more than 1.0µm;
d) the particles having a mean Vickers hardness of no less than 1,000 kgf/mm²,
e) the particles having a mean compressive strength is not less than 40 kgf/mm², and
f) the particles having impact strength of not less than 7 x D^{-0.95} kgf/mm², wherein D is the diameter of the spherical particles.

2. Shot media according to Claim 1 characterised in that:
a) the mean sphericity of the particles is not less than 0.9.

3. Shot media according to Claim 1 or Claim 2 characterised in that:
a) a substantial total quantity of the particles is of size that it does not pass through a sieve of normal aperture size of 0.02mm but does pass through a sieve of normal aperture size of 2mm.

4. Shot media according to Claim 1, 2 or 3 characterised in that the mean relative density is not less than 97% of the theoretical density of the sintered partially stabilized zirconia.

5. Shot media according to any preceding claim characterised in that the partially stabilized zirconia comprises ZrO₂ and Y₂O₃ and the molar ratio of ZrO₂/Y₂O₃ is from 98.5/1.5 to 96/4.

6. Shot media according to any one of claims 1 to 5 characterised in that it contains not less than 70 mole% polycrystalline zirconia.

7. Shot media according to any preceding claim wherein the zirconia comprises from 0.05 to 30 wt% of at least one of the oxides Al₂O₃, TiO₂, MgO, CaO or a rare earth oxide, based on the total of ZrO₂ and Y₂O₃.

8. A process for the preparation of shot media, the process comprising sintering particles that comprise zirconia and each particle is composed of a sintered body of partially stabilized zirconia so that the particles:
(a) pass through a sieve having a normal aperture size of 2.36mm, but do not pass through a sieve having a normal aperture size of 0.02mm,
b) have a mean relative density of not less than 95% of the theoretical density,
c) have a mean grain size of no more than 1.0µm;
d) have a mean Vickers hardness of no less than 1,000 kgf/mm²,
e) have a mean compressive strength is not less than 40 kgf/mm², and
f) have a mean impact strength of not less than 7 x D^{-0.95} kgf/mm², wherein D is the diameter of the spherical particles.

9. A process according to claim 8 wherein a pwoder, having a molar ratio of ZrO₂/Y₂O₃ of from 98.5/1.5 to 96/4, a mean particle size of from 0.5 to 2.0µm and a BET specific surface area of from 3 to 12 m²/g is sintered at a temperature of from 1300 to 1600°C.

10. A process according to claim 9, wherein the powder is treated by a hot isostatic press (HIP) and/or the powder is granulated by an agitation granulator, a tumbling granulator and/or a spray drying granulator.

## Patentansprüche

1. Strahlmedium, umfassend gesinterte Teilchen, die auf Zirkoniumdioxid basieren, wobei jedes Teilchen aus einem gesinterten Körper von teilweise stabilisiertem Zirkoniumdioxid besteht:
a) von dem eine im wesentlichen Gesamtmenge der Teilchen durch ein Sieb mit einer normalen Maschenweite von 2.36 mm geht, aber nicht durch ein Sieb mit einer normalen Maschenweite von 0.02 mm geht,
b) die Teilchen eine mittlere relative Dichte von nicht weniger als 95 % der theoretischen Dichte aufweisen,
c) die Teilchen eine mittlere Korngröße von nicht mehr als 1.0 µm aufweisen,
d) die Teilchen eine mittlere Vickers-Härte von nicht weniger als 1000 kgf/mm² aufweisen,
e) die Teilchen eine mittlere Druckfestigkeit von nicht weniger als 40 kgf/mm² aufweisen und
f) die Teilchen eine Schlagfestigkeit von nicht weniger als 7 x D^{-0.95} kgf/mm² aufweisen, wobei D der Durchmesser der kugelförmigen Teilchen ist.

2. Strahlmedium nach Anspruch 1, dadurch gekennzeichnet, daß:
a) die mittlere Kugelförmigkeit der Teilchen nicht geringer als 0.9 ist.

3. Strahlmedium nach Anspruch 1 oder Anspruch 2, dadurch gekennzeichnet, daß:
a) eine im wesentlichen Gesamtmenge der Teilchen eine Größe aufweist, die nicht durch ein Sieb mit einer normalen Maschenweite von 0.02 mm geht, aber durch ein Sieb mit einer normalen Maschenweite von 2 mm geht.

4. Strahlmedium nach Anspruch 1, 2 oder 3, dadurch gekennzeichnet, daß die mittlere relative Dichte nicht geringer als 97 % der theoretischen Dichte des gesinterten teilweise stabilisierten Zirkoniumdioxids ist.

5. Strahlmedium nach einem der vorstehenden Ansprüche, dadurch gekennzeichnet, daß das teilweise stabilisierte Zirkoniumdioxid ZrO₂ und Y₂O₃ umfaßt und das Molverhältnis von ZrO₂/Y₂O₃ 98.5/1.5 bis 96/4 beträgt.

6. Strahlmedium nach einem der Ansprüche 1 bis 5, dadurch gekennzeichnet, daß es nicht weniger als 70 mol-% polykristallines Zirkoniumdioxid enthält.

7. Strahlmedium nach einem der vorstehenden Ansprüche, in dem das Zirkoniumdioxid 0.05 bis 30 Gew.-% mindestens eines der Oxide Al₂O₃, TiO₂, MgO, CaO oder ein Seltenerdoxid, bezogen auf die Summe von ZrO₂ und Y₂O₃, umfaßt.

8. Verfahren zur Herstellung eines Strahlmediums, wobei das Verfahren Sintern von Teilchen umfaßt, die Zirkoniumdioxid umfassen, wobei jedes Teilchen aus einem gesinterten Körper von teilweise stabilisiertem Zirkoniumdioxid besteht, sodaß die Teilchen:
a) durch ein Sieb mit einer normalen Maschenweite von 2.36 gehen, aber nicht durch ein Sieb mit einer normalen Maschenweite von 0.02 mm gehen,
b) eine mittlere relative Dichte von nicht weniger als 95 % der theoretischen Dichte aufweisen,
c) eine mittlere Korngröße von nicht mehr als 1.0 µm aufweisen,
d) eine mittlere Vickers-Härte von nicht weniger als 1000 kgf/mm² aufweisen,
e) eine mittlere Druckfestigkeit von nicht weniger als 40 kgf/mm² aufweisen und
f) eine mittlere Schlagfestigkeit von nicht weniger als 7 x D^{-0.95} kgf/mm² aufweisen, wobei D der Durchmesser der kugelförmigen Teilchen ist.

9. Verfahren nach Anspruch 8, wobei ein Pulver mit einem Molverhältnis von ZrO₂/Y₂O₃ von 98.5/1.5 bis 96/4, einer mittleren Teilchengröße von 0.5 bis 2.0 µm und einer BET spezifischen Oberfläche von 3 bis 12 m²/g bei einer Temperatur von 1300 bis 1600°C gesintert wird.

10. Verfahren nach Anspruch 9, wobei das Pulver durch ein isostatisches Heißpressen (HIP) behandelt wird und/oder das Pulver durch einen Rührgranulator, einen Taumelgranulator und/oder einen Spraytrockengranulator granuliert wird.

## Revendications

1. Produit de grenaillage comprenant des particules frittées à base de zircone et chaque particule est composée d'un corps fritté de zircone partiellement stabilisé:
a) dont une quantité presque totale des particules passe à travers un tamis ayant une taille d'ouverture normale de 2,36 mm, mais ne passe pas à travers un tamis ayant une taille d'ouverture normale de 0,02 mm,
b) les particules ayant une densité relative moyenne de pas moins que 95 % de la densité théorique,
c) les particules ayant une dimension moyenne des grains de pas plus que 1,0 µm;
d) les particules ayant une dureté Vickers moyenne de pas moins que 1,000 kgf/mm²,
e) les particules ayant une résistance à la compression moyenne de pas moins que 40 kgf/mm², et
f) les particules ayant une résistance au choc de pas moins que 7 x D^{-0,95} kgf/mm², où D est le diamètre des particules sphériques.

2. Produit de grenaillage selon la revendication 1, caractérisé en ce que:
a) la sphéricité moyenne des particules n'est pas inférieure à 0,9.

3. Produit de grenaillage selon la revendication 1 ou la revendication 2, caractérisé en ce que:
a) une quantité presque totale des particules a une dimension telle qu'elle ne passe pas à travers un tamis ayant une taille d'ouverture normale de 0,02 mm mais peut passer à travers un tamis ayant une taille d'ouverture normale de 2 mm.

4. Produit de grenaillage selon la revendication 1, 2 ou 3, caractérisé en ce que la densité relative moyenne n'est pas inférieure à 97 % de la densité théorique du zircone partiellement stabilisé fritté.

5. Produit de grenaillage selon l'une quelconque des revendications précédentes, caractérisé en ce que le zircone partiellement stabilisé comprend du ZrO₂ et du Y₂O₃ et en ce que le rapport molaire de ZrO₂/Y₂O₃ est de 98,5/1,5 à 96/4.

6. Produit de grenaillage selon l'une quelconque des revendications 1 à 5 caractérisé en ce qu'il contient pas moins que 70 % en moles de zircone polycristallin.

7. Produit de grenaillage selon l'une quelconque des revendications précédentes dans lequel le zircone comprend de 0,05 à 30 % en poids d'au moins un des oxydes Al₂O₃, TiO₂, MgO, CaO ou un oxyde de terre rare, par rapport au total de ZrO₂ et Y₂O₃.

8. Procédé pour la préparation d'un produit de grenaillage, le procédé comprenant des particules frittées qui comprennent du zircone et chaque particule est composée d'un corps fritté de zircone partiellement stabilisé de sorte que les particules:
a) passent à travers un tamis ayant une taille d'ouverture normale de 2,36 mm, mais ne passent pas à travers un tamis ayant une taille d'ouverture normale de 0,02 mm,
b) ont une densité relative moyenne de pas moins que 95 % de la densité théorique,
c) ont une dimension moyenne des grains de pas plus que 1,0 µm;
d) ont une dureté Vickers moyenne de pas moins que 1,000 kgf/mm²,
e) ont une résistance à la compression moyenne de pas moins que 40 kgf/mm², et
f) ont une résistance au choc de pas moins que 7 x D^{-0,95} kgf/mm², où D est le diamètre des particules sphériques.

9. Procédé selon la revendication 8, dans lequel une poudre ayant un rapport molaire de ZrO₂/Y₂O₃ de 98,5/1,5 à 96/4, une dimension moyenne des particules de 0,5 à 2,0 µm et une surface spécifique BET de 3 à 12 m²/g est frittée à une température de 1300 à 1600°C.

10. Procédé selon la revendication 9, dans lequel la poudre est traitée par une presse isostatique à chaud (HIP) et/ou la poudre est mise sous la forme de granulés au moyen d'un granulateur à agitation, d'un granulateur à tambour tournant et/ou d'un granulateur à séchage par pulvérisation.
